# FASCICULE DE BREVET EUROPEEN

(11) **EP 2 556 912 B1**
(45) Date de publication et mention de la délivrance du brevet: **16.12.2015**
(21) Numéro de dépôt: 12175716.5
(22) Date de dépôt: 10.07.2012
(51) Int. Cl.: B23K 9/067, B23K 10/00

(54) **Procédé de démarrage d'une torche de coupage plasma à arc transféré par déplacement de la torche, et installation associée**
Verfahren zum Starten eines Plasma-Schneidbrenners mit übertragenem Bogen bei Bewegung des Brenners, und entsprechende Anlage
Method of starting a transferred-arc plasma-cutting torch by displacing the torch, and associated installation

(30) Priorité: 10.08.2011 FR 1157268
(43) Date de publication de la demande: 13.02.2013
(73) Titulaire: AIR LIQUIDE WELDING FRANCE, 75007 Paris (FR)
(72) Inventeur: Renault, Thierry, 95640 MARINES (FR)
(74) Mandataire: Pittis, Olivier

(56) Documents cités:
- JP-A- 7 088 656
- JP-A- 2000 246 449
- US-A- 4 791 268
- US-A- 5 614 110
- US-A1- 2004 129 687

## Description

L'invention concerne un procédé de démarrage d'une torche à plasma à arc transféré permettant d'obtenir une amélioration du cycle de démarrage automatique de la torche et une installation de mise en oeuvre dudit procédé.

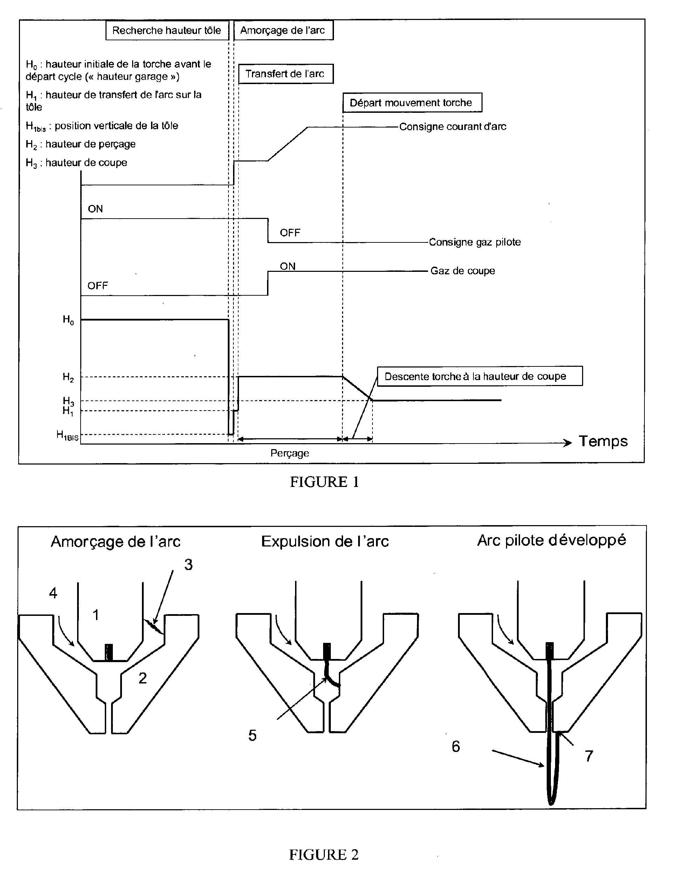

Le cycle de démarrage d'une torche de coupage plasma à arc transféré le plus utilisé est celui décrit sur la Figure 1.

Initialement, la torche à plasma est positionnée à une hauteur H₀ au-dessus de la tôle à découper. Lorsque l'ordre de commencer la coupe est envoyé par l'opérateur via l'IHM (Interface Homme Machine) à l'alimentation électrique la torche descend jusqu'à ce que son extrémité basse, c'est-à-dire la tuyère aval métallique, rencontre la tôle. Un contact électrique s'établit alors et le système reconnaît cette hauteur H_{1BIS}<H₀ comme la surface de la tôle, c'est-à-dire de surface de référence.

La torche remonte alors à une hauteur de transfert H₁ telle que H₀>H₁>H_{1BIS}, qui est prédéfinie et choisie de façon à assurer un transfert de l'arc à la tôle à couper. Elle dépend notamment de l'intensité de courant utilisée, de l'épaisseur et de la nature (aciers doux, aciers inoxydables, aluminium, etc.) de la tôle.

Un ordre d'amorçage de l'arc est ensuite envoyé. La technique d'amorçage de l'arc la plus commune dans les systèmes automatiques de découpe plasma à haute définition est celle utilisant un signal haute tension, de l'ordre de plusieurs kilovolts, et à haute fréquence, de l'ordre de 10 kHz, superposés à la tension à vide du générateur, soit 300 V environ.

Par ailleurs, un gaz, appelé « gaz pilote », est injecté dans la chambre d'arc avant l'application de ce signal haute tension / haute fréquence entre l'électrode et la tuyère amont. La nature du gaz pilote et la pression dans la chambre d'arc sont choisies de façon à favoriser l'amorçage de l'arc. L'air est souvent choisi pour des raisons de disponibilité ; toutefois, d'autres gaz sont aussi couramment utilisés.

Une fois l'arc amorcé 3 entre tuyère 2 et électrode 1, l'écoulement 4 du gaz pilote va expulser l'arc 3, 5 jusqu'en sortie de canal de la tuyère amont 2 de manière à former l'arc pilote 6, lequel arc 3 est immédiatement transféré à la tôle à découper. L'amorçage et la formation de l'arc pilote 6 sont schématisés sur la Figure 2.

Lorsque l'arc est transféré à la tôle, le système remonte la torche à une hauteur de perçage H₂ telle que H_{0>}H₂>H₁>H_{1BIS}. Cette hauteur est prédéfinie et dépend de l'intensité de courant utilisée, de l'épaisseur et de la nature (aciers doux, aciers inoxydables, aluminium, etc.) de la tôle à percer. Cette hauteur H₂ est maintenue durant un temps nécessaire pour percer la tôle. Une fois la tôle percée la coupe peut commencer à une hauteur H₃ telle que H_{0>}H₂>H₁>H₃>H_{1BIS}.

Un procédé de démarrage d'une torche de coupage plasma à arc et une installation, conformes au préambule des revendications 1 et 15, divulgués dans le document US-A-2004/0129687. Initialement, la torche est positionnée à une hauteur dite initiale par rapport à la surface supérieure de la pièce à couper. Un arc pilote est ensuite amorcé entre l'électrode et la pièce à couper puis transféré l'arc vers la pièce, la torche étant maintenue à ladite hauteur initiale. Une fois le perçage initié, la torche est éloignée de la pièce à couper jusqu'à une hauteur de perçage supérieure à la hauteur initiale.

Ce cycle de démarrage, bien que très répandu, présente plusieurs inconvénients.

En particulier, l'utilisation de certains gaz oxydants, comme l'air, en tant que gaz pilote 4 conduit à une usure de la sortie 7 du canal de la tuyère amont 2 (Cf. figure 2). En effet, la nature oxydante du gaz pilote liée à l'énergie apportée par le pied d'arc au niveau de la sortie 7 du canal de la tuyère 2 engendre une érosion qui, à terme, provoque une dégradation de la qualité de coupe.

Afin de pallier à ce problème, le temps d'arc pilote, c'est à dire le temps entre le moment où l'arc pilote se forme et où ce dernier est transféré à la tôle à découper, est réduit en approchant la torche près de la tôle pour favoriser et accélérer le transfert. Cette distance (H₁ sur la Figure 1) est prédéfinie.

Cependant, l'action de transfert à si courte distance est généralement perturbée par de nombreux facteurs, tels que la présence de scories au niveau du point d'amorçage faussant la distance torche/tôle, une surface de tôle non régulière, des défauts d'écoulement gazeux, l'usure des consommables....

Or, si le transfert ne s'effectue pas correctement, voire pas du tout, la machine qui pilote la torche ne continue pas le processus de découpe de la tôle et la découpe s'arrête, ce qui est très pénalisant au plan industriel et nuit à la productivité globale du procédé de coupage.

En outre, du fait que les phases d'amorçage et de transfert de l'arc pilote aient lieu à une hauteur de torche identique et soient très rapides, les causes de dysfonctionnement du transfert de l'arc sont difficiles à identifier. Il s'ensuit des difficultés à fiabiliser le démarrage de la torche et à mettre en oeuvre le procédé de coupage.

Par ailleurs, la nature du gaz pilote utilisé, notamment s'il s'agit d'un gaz oxydant tel l'air, présente l'inconvénient de requérir une énergie importante pour amorcer l'arc. Ainsi, une haute tension plus importante qu'avec un gaz monoatomique (argon par exemple) est nécessaire, ce qui a pour effet d'augmenter la propagation de parasites électromagnétiques, par conduction et/ou radiation, sur l'électronique environnante, tel la commande numérique qui pilote l'installation par exemple. Ces parasites peuvent être éventuellement atténués mais au prix de la mise en oeuvre d'un câblage difficile à mettre en place et surtout coûteux.

Le problème qui se pose est dès lors d'améliorer le cycle de démarrage d'une torche de coupage plasma à arc transféré de manière à éviter les inconvénients susmentionnés. La solution est un procédé de démarrage d'une torche de coupage plasma à arc transféré tel que défini dans la revendication, comprenant:
a) positionnement de la torche à une hauteur d'amorçage Hₐ donnée par rapport à la surface supérieure de la pièce à couper, et amorçage d'un arc pilote,
b) rapprochement de la torche de la surface supérieure de la pièce jusqu'à une hauteur de transfert H₁, avec H₁<Hₐ, et transfert de l'arc pilote vers la pièce, et
c) éloignement de la torche de la surface supérieure de la pièce jusqu'à une hauteur de perçage H₂, avec H₂>Hₐ, et début de perçage de la pièce.

Selon le cas, le procédé de l'invention peut comprendre l'une ou plusieurs des caractéristiques techniques suivantes :
- on alimente la torche en gaz pilote durant les étapes a) et b).
- on stoppe l'alimentation en gaz pilote et on alimente la torche en gaz de coupe juste après l'amorçage de l'arc pilote.
- on stoppe l'alimentation en gaz pilote et on alimente la torche en gaz de coupe à partir du transfert de l'arc pilote vers la pièce.
- on amorce l'un arc pilote à l'étape a), a une intensité pilote I₀ non nulle.
- durant l'étape b), on commence à augmenter progressivement le courant depuis l'intensité pilote I₀ jusqu'à une intensité de coupe I₁ donnée, avec I₁ > I₀.
- on débute une augmentation linéaire du courant par passage du courant pilote I₀ au courant de coupe I₁, avant le transfert de l'arc sur la tôle, c'est-à-dire que le passage de I0 à I1 se fait selon une rampe de courant linéaire qui commence avant le transfert de l'arc.
- à l'étape c), l'augmentation progressive du courant de I₀ à I₁ est opérée pendant une durée (Tᵣ) donnée, avec Tᵣ < Tₚ où Tₚ est la durée totale de l'étape de perçage.
- la torche est maintenue à la hauteur de transfert H₂ pendant toute la durée de perçage Tₚ.
- on maintient l'intensité de coupe I₁ au moins pendant une partie de la durée de perçage Tₚ.
- on maintient l'intensité de coupe I₁ sensiblement constante pendant la durée de la coupe proprement dite, c'est-à-dire après perçage de la pièce.
- après perçage totale de la pièce à l'issue de l'étape c), on opère un mouvement de déplacement translatif de la torche par rapport à la pièce à couper selon une trajectoire donnée :
   i) en maintenant d'abord la torche à la hauteur de transfert H₂ pendant une durée de début de coupe donnée, et
   ii) en opérant, à l'issue de la durée de début de coupe, un rapprochement progressif de la torche par rapport à la pièce jusqu'à une hauteur de coupe H₃ telle que : H₁<H₃<H₂.
- la coupe est opérée selon la trajectoire de coupe souhaitée, en maintenant la torche à la hauteur de coupe H₃ et le courant à l'intensité de coupage I₁.
- préalablement à l'étape a), on procède successivement selon les étapes suivantes:
   - on positionne d'abord la torche à une hauteur initiale H₀ au-dessus de la tôle à découper,
   - on approche ensuite la torche de la pièce jusqu'à ce qu'un contact électrique s'établisse entre la torche et la pièce, à une hauteur de référence H_{1BI}, avec H_{1BIS}<H₀ correspondant à la surface supérieure de la pièce, et
   - on remonte alors la torche à la hauteur d'amorçage Ha avec H₀>Ha>H_{1BIS},.
- le gaz pilote mis en oeuvre durant les étapes a) et b) est choisi parmi l'argon, le krypton, le xénon, l'azote et leurs mélanges.
- le gaz de coupe utilisé à partir de l'étape c) est choisi parmi l'oxygène, l'azote, l'air, l'argon, l'hydrogène, un mélange argon/hydrogène, un mélange azote/hydrogène et mélange argon/azote/hydrogène

L'invention concerne aussi un procédé de coupage plasma d'une pièce métallique, en particulier en acier carbone, en acier inoxydable, en aluminium, en un alliage d'aluminium, en titane ou en alliage de titane, mettant en oeuvre une torche à plasma à arc transféré comprenant une tuyère et une électrode, dans lequel on contrôle le démarrage de la torche en opérant selon le procédé de démarrage selon l'invention.

Par ailleurs, l'invention porte également sur une installation de coupage plasma telle que définie dans la revendication 15, comprenant :
- un bâti-support avec une poutre mobile sur laquelle est agencée une torche à plasma à arc transféré, ladite torche étant elle-même agencée de manière mobile sur ladite poutre,
- des moyens supports de pièce aptes à et conçus pour supporter une pièce à découper,
- des moyens de commande permettant de piloter des moyens de positionnement vertical de la torche de manière à déplacer la torche en éloignement ou en rapprochement par rapport aux moyens supports de pièce,
   où les moyens de commande sont programmés pour commander :
   a) un positionnement de la torche à une hauteur d'amorçage Ha donnée par rapport à la surface supérieure de la pièce à couper lorsqu'elle est supportée par les moyens-supports de pièce, de manière à opérer un amorçage de l'arc pilote à ladite hauteur Ha,
   b) un rapprochement de la torche de la surface supérieure de la pièce jusqu'à une hauteur de transfert H1, avec H1<Ha, de manière à opérer un transfert de l'arc pilote à ladite hauteur H1, et
   c) un éloignement de la torche jusqu'à une hauteur de perçage H2, avec H2>Ha de manière à débuter le perçage à ladite hauteur H2

L'invention va être mieux comprise grâce à la description détaillée suivante faite en références aux figures annexées parmi lesquelles :
- la Figure 1 est un schéma d'un cycle de démarrage d'une torche à plasma selon l'art antérieur,
- la Figure 2 est un schéma illustratif de l'amorçage et de la formation de l'arc pilote dans une torche à plasma,
- la Figure 3 représente un premier mode de réalisation d'un cycle de démarrage automatique d'une torche à plasma selon la présente invention et
- la Figure 4 représente un deuxième mode de réalisation d'un cycle de démarrage automatique d'une torche à plasma selon la présente invention.
- la Figure 5 est un schéma d'un mode de réalisation d'une installation de coupage apte à mettre en oeuvre le procédé de l'invention.

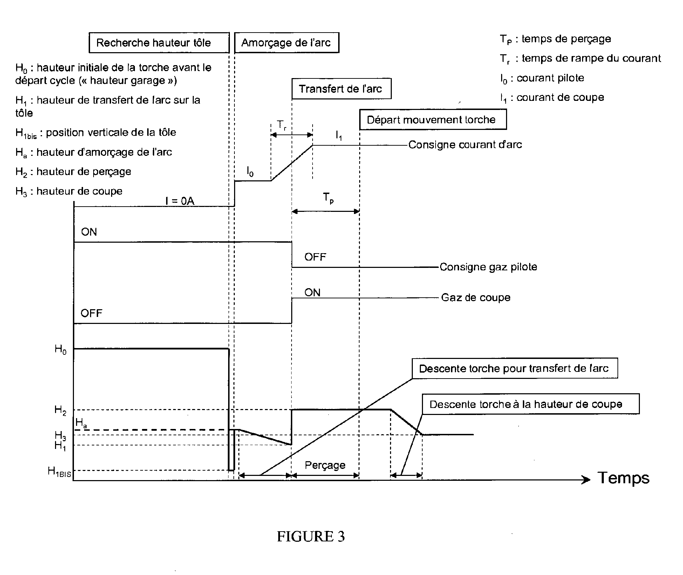

Un premier mode de réalisation d'un cycle automatique de transfert d'un arc électrique pour découpe plasma selon l'invention est illustré sur la Figure 3, d'une pièce qui est ici une tôle d'acier ; toutefois, le procédé fonctionne également avec des pièces en acier inoxydable, en aluminium ou ses alliages et en titane et ses alliages.

La Figure 3 montre d'abord la position, c'est-à-dire la hauteur H, de la torche par rapport à la surface supérieure de la tôle à couper, la gestion des gaz pilote et de coupe, et la consigne de courant au fil du temps, donc permet de bien comprendre et visualiser à quels instants et pendant quelles durées ont lieu les différentes étapes du procédé de l'invention.

Plus précisément, on voit qu'initialement la torche est positionnée à une hauteur H₀ au dessus de la tôle à découper, par exemple une hauteur H₀ de 200 à 600 mm.

Dans tous les cas, on utilise un porte-outil numérique, de préférence géré par un contrôleur de hauteur, pour bouger la torche dans l'axe vertical en approchement ou, selon le cas, en éloignement par rapport à la tôle à couper qui est habituellement située sur des moyens supports de pièce, telle une table-support ou analogue.

Le processus de découpe commence d'abord par une descente de la torche jusqu'à ce que son extrémité basse, c'est-à-dire la tuyère 2 aval métallique, vienne à proximité immédiate de la surface supérieure de la tôle à découper. Ceci permet, grâce à des codeurs, de connaître la position, i.e. la distance de la torche par rapport à la référence que constitue la surface supérieure de la tôle.

En effet, lorsque la tuyère se trouve au contact de la tôle, un contact électrique s'établit alors entre la tuyère aval et la tôle. Un courant électrique passant par la tôle et la tuyère aval est détecté (système de détection souvent inclus dans le générateur). Le contrôleur de hauteur reconnaît alors cette hauteur de pièce H_{1BIS}, avec H_{1BIS}<H₀, comme la surface de la tôle qui est alors la surface de référence (H_{1BIS} = 0 mm).

Ensuite, la torche est remontée par le contrôleur de hauteur, c'est-à-dire éloignée de la tôle, à une hauteur d'amorçage Hₐ, par exemple 8 mm environ, à laquelle se produit un amorçage de l'arc pilote comme illustré en Figure 2 et décrit ci-avant.

Puis, dès amorçage de l'arc pilote, la torche est progressivement approchée de la tôle, selon une rampe de descente décroissante, jusqu'à atteindre une hauteur de transfert H₁, telle que Ha>H₁>H_{1BIS}. A la hauteur de transfert H₁, l'arc pilote va être transféré à la tôle.

En d'autres termes, une fois l'arc pilote établi à la hauteur Hₐ, la torche commence son mouvement de descente vers la tôle. Ce mouvement continue tant que l'arc pilote n'est pas transféré à la tôle. Ainsi, la torche rencontrera toujours la position optimum de transfert H₁ de l'arc assurant ainsi une fiabilité de démarrage maximum.

De plus, la phase de transfert ne commence que si et seulement si l'arc pilote a bien été établi. Or, dans le cycle actuel la hauteur de transfert est aussi la hauteur d'amorçage afin d'accélérer la phase pilote et le transfert (puisque le gaz pilote est souvent l'air, conduisant à une usure rapide de la tuyère). Si le transfert n'a pas lieu il est souvent difficile d'identifier la cause puisque les deux phases (arc pilote et transfert) sont très rapides.

De là, dans le cadre de l'invention, la différentiation dans le temps des deux phases permet une meilleur gestion des erreurs.

La valeur de Hₐ peut-être choisie soit très proche de la tôle, par exemple 5 mm, de façon à accélérer la phase arc pilote/transfert, soit éloignée, par exemple de l'ordre de 20 mm afin de prendre en compte la présence de scories sur la surface de la tôle près de la zone de transfert.

Une fois l'arc transféré, le système remonte la torche à une hauteur de perçage H₂ telle que H₀>H₂>Hₐ>H₁>H_{1BIS}. Cette hauteur de perçage H₂ est préfixée, c'est-à-dire préprogrammé dans l'installation. Elle dépend de l'intensité de courant utilisée, de l'épaisseur et de la nature (aciers doux, aciers inoxydables, aluminium, etc.) des la tôle à percer. Elle est maintenue durant un temps de perçage Tp nécessaire pour percer la tôle.

Enfin, une fois la tôle percée, la coupe proprement dite peut commencer à une hauteur de coupe H₃ intermédiaire, telle que H₀>H₂>H₃>H_{1BIS}.

Dans le cadre du procédé de l'invention, l'arc pilote est d'abord amorcé préférentiellement dans un gaz non oxydant, de préférence un gaz inerte comme l'argon, puis, le flux de gaz expulse l'arc pilote hors du canal de la tuyère amont 2.

Le choix d'un gaz non-oxydant, tel l'argon, est motivé par deux critères principaux, à savoir :
- il ne nécessite qu'une faible énergie pour amorcer un arc. Par exemple, des essais effectués dans un environnement contrôlé ont montré que, dans les mêmes conditions (en particulier pression du gaz et configuration des électrodes identiques), l'oxygène utilisé comme gaz d'amorçage nécessite une tension de l'ordre d'au moins 4 kV, alors que l'argon nécessite moins de 2 kV. Ceci a pour effet de fiabiliser le système de coupage car il y a une réduction importante du bruit électromagnétique qui est rayonné et/ou conduit dans l'électronique du système de découpe (CN par exemple), limitant, de fait, les dysfonctionnements du système de découpe plasma. De plus, l'installation d'un tel système élimine le câblage coûteux et difficile à installer.
- il est chimiquement inerte. Ainsi, lorsque l'arc pilote est expulsé hors de la tuyère amont 2, l'usure de la sortie 7 du canal de la tuyère est limité. Par exemple, lors de l'utilisation d'un gaz réactif tel que l'oxygène ou l'air, l'action oxydante associée à l'énergie apportée par le pied d'arc provoque une érosion rapide au niveau de l'accrochage de l'arc 7 sur la tuyère 2 (cf. Figure 2).

En plus de l'argon, les gaz inertes comme le krypton, le xénon et leurs mélanges peuvent être utilisés. Utiliser de l'azote est moins recommandé, bien que possible, car une énergie plus importante est nécessaire pour amorcer l'arc et la quantité d'énergie importante apportée par le pied d'arc conduit à l'érosion de la sortie 7 du canal de la tuyère amont 2 (bien que l'érosion soit moins importante que celle engendrée par l'air).

En fait, en utilisant un gaz pilote inerte et nécessitant une faible énergie pour l'amorçage de l'arc, tel que l'argon, on assure une réduction des parasites électromagnétiques et de l'usure de la tuyère 2. L'utilisation d'un tel gaz permet donc d'augmenter le temps d'arc pilote puisque l'arc est amorcé à une hauteur de torche légèrement plus importante que la hauteur de transfert, puis l'arc pilote est transféré lors de la descente de la torche vers la tôle. Ainsi, la hauteur de transfert n'a pas besoin d'être prédéfinie et la torche se trouvera toujours à la bonne hauteur de transfert. C'est donc une méthode de transfert dite « active » par opposition à une hauteur de transfert fixe dite « passive ».

Pendant la descente de la torche vers la tôle (de Hₐ vers H₁), la tuyère ne s'use pas grâce à l'emploi de l'argon comme gaz pilote.

Le Tableau ci-après donne des plages de valeurs des différentes hauteurs H utilisables dans le cadre de la présente invention (cycle actif) en comparaison de celles utilisées dans un procédé antérieur selon la Figure 1 (cycle passif).

**Tableau**

| Type de cycle | H₀ [mm] | H_{1BIS} [mm] | Hₐ [mm] | H₁ [mm] | H₂ [m] | H₃ [mm] |
|---|---|---|---|---|---|---|
| Cycle passif (art antérieur) | > 200 | 0 | NA | 1 - 10 | 5 - 30 | 1 - 6 |
| Cycle actif (invention) | > 200 | 0 | 5 - 20 | Toujours adaptée | 5 - 30 | 1 - 6 |

Comme on le voit, avec le procédé de l'invention, on peut travailler à une hauteur d'amorçage Ha < H2 et une hauteur H1 adaptée.

Toutefois, les hauteurs choisies dépendent étroitement en particulier du procédé utilisé, notamment du type de gaz de coupe, de l'intensité de courant, de l'épaisseur et du type de matériau constituant la tôle à découper.

Un autre avantage de la séparation des phases arc pilote et transfert réside dans la possibilité de passer du gaz pilote au gaz de coupe lorsque l'établissement de l'arc pilote a été reconnu.

En effet, dans le cycle actuel, à cause de l'usure de la tuyère engendrée par le gaz pilote le temps d'arc pilote est réduit au minimum. Dans ce cas, le passage du gaz pilote au gaz de coupe est effectué au moment où le transfert de l'arc est détecté. Les procédés à faible courant (1< 80 A) possèdent une tuyère avec un canal de petit diamètre, ce qui a pour effet de réduire le débit massique. Ainsi, le passage du gaz pilote au gaz de coupe se fait lentement de sorte que la coupe commence avec le gaz pilote. La qualité de coupe est alors dégradée.

Dans le cadre de l'invention, le passage du gaz pilote au gaz de coupe est anticipé puisque si l'arc pilote est bien établi, alors le passage du gaz pilote au gaz de coupe peut être effectué. Le gaz de coupe peut être par exemple l'oxygène.

La hauteur d'amorçage Hₐ est choisie afin de laisser le temps au gaz d'être complètement changé, comme dans le cas, par exemple, du procédé de découpe acier à 30 A.

On peut également jouer sur la vitesse de descente du porte-outil numérique.

Si le transfert ne s'effectue pas, le mouvement de la torche peut être arrêté environ 1 mm au-dessus de la tôle afin d'éviter que la torche rentre en contact avec cette dernière et, ainsi, éviter d'endommager les consommable. Ensuite, la torche remonte en position d'amorçage, à la hauteur Hₐ, avec changement du gaz de coupe au gaz pilote, et le processus recommence, selon les étapes de : amorçage de l'arc, établissement de l'arc pilote, changement gaz pilote / gaz de coupe, descente de la torche pour le transfert.

S'il y a transfert de l'arc avant 1 mm au-dessus de la tôle, alors le processus se poursuit comme décrit auparavant. Sinon, il s'opère un retour de la torche à la hauteur d'amorçage Hₐ.

L'amorçage de l'arc pilote est un phénomène très rapide (typiquement < 500ms), il est opéré avec passage rapide du courant d'une intensité nulle à une intensité d'arc pilote I₀ donnée, typiquement de l'ordre de 10 à 30A, puis le transfert de l'arc pilote est opéré avec passage du courant d'une intensité d'arc pilote I₀ donnée, à une intensité de coupe I₁, par exemple de l'ordre de 15 à 900 A, avec I₁ > I₀. Durant le perçage, on met en oeuvre une augmentation progressive du courant de I₀ à I₁ et on maintient l'intensité I₁ pendant la durée de la coupe proprement dite selon la trajectoire de coupe souhaitée.

En fait, entre la fin de la période d'amorçage et le moment du départ de la coupe, on augmente progressivement le courant depuis l'intensité d'arc pilote I₀ jusqu'à l'intensité de coupe I₁ donnée, c'est-à-dire une montée selon une rampe de courant linéaire de durée donnée Tᵣ avec Tᵣ ≤ Tₚ où Tₚ est la durée totale du perçage.

Il est aussi possible de commencer la rampe de courant linéaire, du courant pilote I₀ au courant de coupe I₁, avant le transfert de l'arc sur la tôle. Ainsi, le courant pilote augmente progressivement lors de la descente de la torche vers la hauteur de transfert H₁, assurant une hauteur de transfert plus importante. En opérant de la sorte la phase de transfert de l'arc sur la tôle est plus fiable et la hauteur de transfert plus importante. Ceci est un avantage dans le cas de découpe de tôle d'épaisseur supérieure à 40 mm.

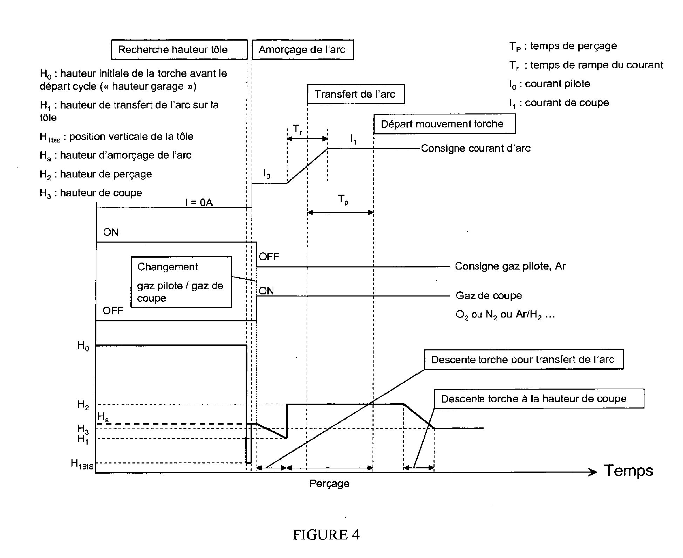

La Figure 4 représente un second mode de réalisation d'un cycle de démarrage automatique d'une torche à plasma selon la présente invention qui est en tout point identique au premier mode de réalisation de la Figure 3, à l'exception du moment du passage du gaz de pilote au gaz de coupe.

En effet, dans le cycle de la Figure 3, le passage du gaz pilote au gaz de coupe est opéré, après amorçage de l'arc et lorsque la torche est à la hauteur de transfert H1, avec H1<Ha, alors que, dans le cycle de la Figure 4, le passage du gaz pilote au gaz de coupe est opéré, immédiatement après amorçage de l'arc et lorsque la torche est encore à la hauteur de d'amorçage Ha (avec Ha > H1).

Dans le cycle de la Figure 4, le passage du gaz pilote au gaz de coupe s'effectue donc de manière plus rapide après amorçage de l'arc pilote que dans celui de la Figure 3.

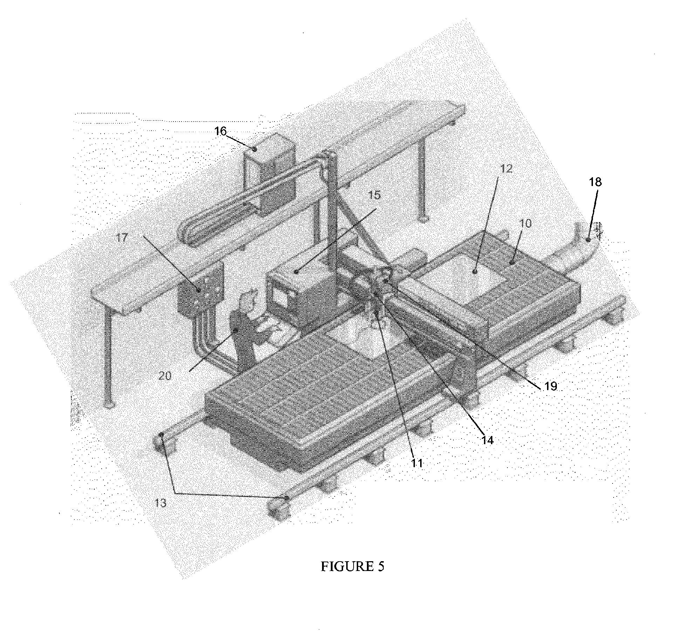

Pour mettre en oeuvre le procédé de l'invention, on utilise préférentiellement une installation de coupage plasma comprenant un bâti-support posé ou fixé sur le sol, par exemple sur des rails 13, qui supporte une poutre mobile avec porte-outil 14 sur laquelle est agencé une torche à plasma 11 à arc transféré comme illustré en Figure 5. La torche 11 est elle-même agencée de manière mobile sur la poutre.

La tôle 12 à couper est elle portée par une table de découpe 10 située sous le bâti.

Le déplacement de la torche 11 sur la poutre et/ou de la poutre sur le bâti est obtenu grâce à des actionneurs motorisés ou tout autre dispositif analogue.

Elle comprend des moyens supports de pièce aptes à et conçus pour supporter une pièce à découper, telle une table sur laquelle est couchée une tôle à couper.

Des moyens de commande 15, tel un PC, une carte de contrôle, une commande numérique CN,... permettent de piloter des moyens de positionnement vertical de la torche 11, c'est-à-dire un porte-outil mobile 14 verticalement (axe Z), de manière à déplacer la torche 11 en éloignement ou en rapprochement par rapport aux moyens supports de pièce, c'est-à-dire la table support 10, et donc aussi à la surface supérieure de la tôle 12 à couper.

L'installation comprend aussi de manière classique un générateur de courant 16 avec système de refroidissement, un boitier de sélection 17 des gaz, un extracteur de fumées 18, ainsi qu'une interface homme-machine ou IHM coopérant avec les moyens de commande 15 et sur laquelle intervient un opérateur 20 pour rentrer les consignes et autres informations nécessaires au bon déroulement de la coupe.

Selon l'invention, les moyens de commande 15 sont programmés par l'opérateur 20 pour mettre en oeuvre les différentes étapes du procédé de l'invention, en particulier le positionnement de la torche 11 à une hauteur d'amorçage Ha donnée par rapport à la surface supérieure de la pièce 12 à couper lorsqu'elle est supportée par les moyens-supports de pièce, de manière à opérer un amorçage de l'arc pilote à ladite hauteur Ha ; un rapprochement de la torche de la surface supérieure de la pièce jusqu'à une hauteur de transfert H1, avec H1<Ha, de manière à opérer un transfert de l'arc pilote à ladite hauteur H1 ; et un éloignement de la torche jusqu'à une hauteur de perçage H2, avec H2>Ha de manière à débuter le perçage à ladite hauteur H2.

De manière connue en soi, l'amorçage de l'arc et la régulation des gaz se fait via un système d'amorçage/régulation 19 classique positionné sur la poutre mobile du bâti.

Le procédé de l'invention est particulièrement adapté à la découpe des matériaux métalliques, en particulier les aciers, y compris les aciers inoxydables ou spéciaux, ainsi que l'aluminium et ses alliages ou d'autres matériaux, tel le titane et ses alliages, le cuivre....

## Revendications

1. Procédé de démarrage d'une torche de coupage plasma à arc transféré comprenant les étapes de :
b) rapprochement de la torche de la surface supérieure de la pièce jusqu'à une hauteur de transfert H₁ d'un arc pilote vers la pièce, et
c) éloignement de la torche de la surface supérieure de la pièce jusqu'à une hauteur de perçage H₂, avec H₂>Hₐ, et début de perçage de la pièce,
**caractérisé en ce que**, préalablement à l'étape b), le procédé comprend une étape de :
a) positionnement de la torche à une hauteur d'amorçage Hₐ donnée par rapport à la surface supérieure de la pièce à couper, avec H₁<Hₐ<H₂, et amorçage de l'arc pilote.

2. Procédé selon la revendication précédente, **caractérisé en ce qu'**on alimente la torche en gaz pilote durant les étapes a) et b).

3. Procédé selon l'une des revendications précédentes, **caractérisé en ce qu'**on stoppe l'alimentation en gaz pilote et on alimente la torche en gaz de coupe juste après l'amorçage de l'arc pilote.

4. Procédé selon l'une des revendications 1 ou 2, **caractérisé en ce qu'**on stoppe l'alimentation en gaz pilote et on alimente la torche en gaz de coupe à partir du transfert de l'arc pilote vers la pièce.

5. Procédé selon l'une des revendications précédentes, **caractérisé en ce qu'**on amorce l'un arc pilote à l'étape a), a une intensité pilote I₀ non nulle.

6. Procédé selon l'une des revendications précédentes, **caractérisé en ce que**, durant l'étape b), on commence à augmenter progressivement le courant depuis l'intensité pilote I₀ jusqu'à une intensité de coupe I₁ donnée, avec I₁ > I₀.

7. Procédé selon l'une des revendications précédentes, **caractérisé en ce qu'**à l'étape c), l'augmentation progressive du courant de I₀ à I₁ est opérée pendant une durée (Tᵣ) donnée, avec Tᵣ < Tₚ où Tₚ est la durée totale de l'étape de perçage.

8. Procédé selon l'une des revendications précédentes, **caractérisé en ce que** la torche est maintenue à la hauteur de transfert H₂ pendant toute la durée de perçage Tₚ, de préférence on maintient l'intensité de coupe I₁ au moins pendant une partie de la durée de perçage Tₚ.

9. Procédé selon l'une des revendications précédentes, **caractérisé en ce qu'**après perçage totale de la pièce à l'issue de l'étape c), on opère un mouvement de déplacement translatif de la torche par rapport à la pièce à couper selon une trajectoire donnée :
i) en maintenant d'abord la torche à la hauteur de transfert H₂ pendant une durée de début de coupe donnée, et
ii) en opérant, à l'issue de la durée de début de coupe, un rapprochement progressif de la torche par rapport à la pièce jusqu'à une hauteur de coupe H₃ telle que : H₁<H₃<H₂.

10. Procédé selon l'une des revendications précédentes, **caractérisé en ce que** la coupe est opérée selon la trajectoire de coupe souhaitée, en maintenant la torche à la hauteur de coupe H₃ et le courant à l'intensité de coupage I₁.

11. Procédé selon l'une des revendications précédentes, **caractérisé en ce que**, préalablement à l'étape a), on procède successivement selon les étapes suivantes :
- on positionne d'abord la torche à une hauteur initiale H₀ au-dessus de la tôle à découper,
- on approche ensuite la torche de la pièce jusqu'à ce qu'un contact électrique s'établisse entre la torche et la pièce, à une hauteur de référence H_{1BI}, avec H_{1BIS}<H₀ correspondant à la surface supérieure de la pièce, et
- on remonte alors la torche à la hauteur d'amorçage Ha avec H₀>Ha>H_{1BIS},.

12. Procédé selon l'une des revendications précédentes, **caractérisé en ce que** le gaz pilote mis en oeuvre durant les étapes a) et b) est choisi parmi l'argon, le krypton, le xénon, l'azote et leurs mélanges.

13. Procédé selon l'une des revendications précédentes, **caractérisé en ce que** le gaz de coupe utilisé à partir de l'étape c) est choisi parmi l'oxygène, l'azote, l'air, l'argon, l'hydrogène, un mélange argon/hydrogène, un mélange azote/hydrogène et mélange argon/azote/hydrogène.

14. Procédé de coupage plasma d'une pièce métallique, en particulier en acier carbone, en acier inoxydable, en aluminium, en un alliage d'aluminium, en titane ou en alliage de titane, mettant en oeuvre une torche à plasma à arc transféré comprenant une tuyère (2) et une électrode (1), dans lequel on contrôle le démarrage de la torche en opérant selon le procédé de démarrage selon l'une des revendications précédentes.

15. Installation de coupage plasma comprenant :
- un bâti-support avec une poutre mobile sur laquelle est agencée une torche à plasma à arc transféré, ladite torche étant elle-même agencée de manière mobile sur ladite poutre,
- des moyens supports de pièce aptes à et conçus pour supporter une pièce à découper,
- des moyens de commande permettant de piloter des moyens de positionnement vertical de la torche de manière à déplacer la torche en éloignement ou en rapprochement par rapport aux moyens supports de pièce,
**caractérisé en ce que** les moyens de commande étant programmés pour commander :
a) un positionnement de la torche à une hauteur d'amorçage Hₐ donnée par rapport à la surface supérieure de la pièce à couper lorsqu'elle est supportée par les moyens-supports de pièce, avec H₁<Hₐ<H₂, de manière à opérer un amorçage d'un arc pilote,
b) un rapprochement de la torche de la surface supérieure de la pièce jusqu'à une hauteur de transfert H1 de manière à opérer un transfert de l'arc pilote à ladite hauteur H1, et
c) un éloignement de la torche jusqu'à une hauteur de perçage H2, de manière à débuter le perçage à ladite hauteur H2.

## Patentansprüche

1. Verfahren zum Einschalten eines Plasmaschneidbrenners mit übertragenem Lichtbogen, die folgenden Schritte umfassend:
b) Annähern des Schneidbrenners an die obere Fläche des Werkstücks bis zu einer Höhe H₁ zum Übertragen eines Pilotlichtbogens auf das Werkstück, und
c) Entfernen des Schneidbrenners von der oberen Fläche des Werkstücks bis auf eine Bohrhöhe H₂, mit H₂>Hₐ, und Beginn des Bohrens des Werkstücks,
**dadurch gekennzeichnet, dass** das Verfahren vor dem Schritt b) einen folgenden Schritt umfasst:
a) Positionieren des Schneidbrenners auf einer gegebenen Zündhöhe Hₐ im Verhältnis zur oberen Fläche des zu schneidenden Werkstücks, mit H₁<Hₐ<H₂ und Zünden des Pilotbogens.

2. Verfahren nach dem vorherigen Anspruch, **dadurch gekennzeichnet, dass** man den Schneidbrenner während der Schritte a) und b) mit Startgas versorgt.

3. Verfahren nach einem der vorherigen Ansprüche, **dadurch gekennzeichnet, dass** man die Zuführung von Startgas unmittelbar nach dem Zünden des Pilotbogens stoppt und man den Schneidbrenner mit Schneidgas versorgt.

4. Verfahren nach einem der Ansprüche 1 oder 2, **dadurch gekennzeichnet, dass** man die Zuführung von Startgas ab dem Übertragen des Pilotlichtbogens auf das Werkstück stoppt und man den Schneidbrenner mit Schneidgas versorgt.

5. Verfahren nach einem der vorherigen Ansprüche, **dadurch gekennzeichnet, dass** man den Pilotbogen in Schritt a) mit einer Pilotstärke I₀ ungleich Null zündet.

6. Verfahren nach einem der vorherigen Ansprüche, **dadurch gekennzeichnet, dass** man während des Schrittes b) den Strom ausgehend von der Pilotstärke I₀ progressiv bis zu einer gegebenen Schneidstärke I₁, mit I₁ > I₀, ansteigen lässt.

7. Verfahren nach einem der vorherigen Ansprüche, **dadurch gekennzeichnet, dass** im Schritt c) der progressive Anstieg des Stroms von I₀ auf I₁ während einer gegebenen Dauer (Tᵣ) vorgenommen wird, mit Tᵣ < Tₚ, wobei Tₚ der Gesamtdauer des Bohrschrittes entspricht.

8. Verfahren nach einem der vorherigen Ansprüche, **dadurch gekennzeichnet, dass** der Schneidbrenner während der gesamten Bohrdauer Tₚ auf der Übertragungshöhe H₂ gehalten wird, wobei man vorzugsweise die Schneidstärke I₁ zumindest während eines Teils der Bohrdauer Tₚ beibehält.

9. Verfahren nach einem der vorherigen Ansprüche, **dadurch gekennzeichnet, dass** man nach dem vollständigen Bohren des Werkstücks am Ende des Schritts c) eine Vorschubbewegung des Schneidbrenners im Verhältnis zum zu schneidenden Werkstück entlang einer gegebenen Bahn vornimmt:
i) indem man den Schneidbrenner zuerst für eine gegebene Dauer eines Schneidbeginns auf der Übertragungshöhe H₂ beibehält, und
ii) indem man am Ende der Dauer des Schneidbeginns eine progressive Annäherung des Schneidbrenners im Verhältnis zum Werkstück bis auf eine Schneidhöhe H₃ vornimmt, mit: H₁<H₃<H₂.

10. Verfahren nach einem der vorherigen Ansprüche, **dadurch gekennzeichnet, dass** der Schnitt entlang einer gewünschten Schneidbahn vorgenommen wird, indem man den Schneidbrenner auf der Schneidhöhe H₃ hält und mit dem Strom auf Schneidstärke I₁.

11. Verfahren nach einem der vorherigen Ansprüche, **dadurch gekennzeichnet, dass** man vor dem Schritt a) entsprechend der folgenden Schritte vorgeht:
- man positioniert den Schneidbrenner zuerst auf eine ursprüngliche Höhe H₀ über dem zu schneidenden Blech,
- man nähert den Schneidbrenner danach dem Werkstück an, bis sich auf einer Bezugshöhe H_{1BI} ein elektrischer Kontakt zwischen dem Schneidbrenner und dem Werkstück einstellt, mit H_{1BIS}<H₀ entsprechend der oberen Fläche des Werkstücks, und
- man den Schneidbrenner danach auf die Zündhöhe Hₐ anhebt, mit H₀>Hₐ>H_{1BIS}.

12. Verfahren nach einem der vorherigen Ansprüche, **dadurch gekennzeichnet, dass** das während der Schritte a) und b) verwendete Startgas aus Argon, Krypton, Xenon, Stickstoff und einer Mischung daraus ausgewählt wird.

13. Verfahren nach einem der vorherigen Ansprüche, **dadurch gekennzeichnet, dass** das ab dem Schritt c) verwendete Schneidgas aus Sauerstoff, Stickstoff, Luft, Argon, Wasserstoff, einer Mischung aus Argon/Wasserstoff, einer Mischung aus Stickstoff/Wasserstoff und einer Mischung aus Argon/Stickstoff/Wasserstoff ausgewählt wird.

14. Verfahren zum Plasmaschneiden eines Metallwerkstücks, im Speziellen aus Kohlenstoffstahl, aus rostfreiem Stahl, aus Aluminium, aus einer Aluminiumlegierung, aus Titan oder aus einer Titanlegierung, indem man einen Plasmaschneidbrenner mit übertragenem Lichtbogen, eine Düse (2) und eine Elektrode (1) umfassend anwendet, wobei man das Einschalten des Schneidbrenners steuert, indem man das Einschaltverfahren nach einem der vorherigen Ansprüche anwendet.

15. Plasmaschneidanlage, folgendes umfassend:
- ein Traggestell mit einem mobilen Träger, auf dem ein Plasmaschneidbrenner mit übertragenem Lichtbogen angeordnet ist, wobei der besagte Schneidbrenner selbst beweglich auf dem besagten Träger angeordnet ist,
- Werkstückhaltemittel, die in der Lage und derart ausgeführt sind, um ein zu schneidendes Werkstück zu halten,
- Steuermittel, zum Ansteuern der Mittel zur vertikalen Positionierung des Schneidbrenners um den Schneidbrenner im Verhältnis zu den Werkstückhaltemitteln anzunähern oder davon zu entfernen,
**dadurch gekennzeichnet, dass** die Steuermittel programmiert sind, um folgendes anzusteuern:
a) eine Positionierung des Schneidbrenners auf einer gegebenen Zündhöhe Hₐ im Verhältnis zur oberen Fläche des zu schneidenden Werkstücks, wenn es durch die Werkstückhaltemittel gehalten wird, mit H₁<Hₐ<H₂, um eine Zündung eines Pilotbogens vorzunehmen,
b) ein Annähern des Schneidbrenners an die obere Fläche des Werkstücks bis auf eine Übertragungshöhe H₁, um eine Übertragung des Pilotbogens auf der besagten Höhe H₁ vorzunehmen, und
c) eine Entfernung des Schneidbrenners bis auf eine Bohrhöhe H₂, um auf der besagten Höhe H₂ mit dem Bohren zu beginnen.

## Claims

1. Method of starting a transferred-arc plasma-cutting torch comprising the steps of:
b) approaching the torch of the upper surface of the piece to a transfer height H₁ of a pilot arc to the piece, and
c) separating the torch of the upper surface of the piece to a drilling height H₂ with H₂>Hₐ, and starting of the drilling of the piece,
**characterised in that**, prior to the step b), the method comprises a step of:
a) positioning the torch at a starting height Hₐ provided with respect to the upper surface of the piece to be cut, with H₁<Hₐ<H₂, and initiation of the pilot arc.

2. Method as claimed in the preceding claim, **characterised in that** the torch is supplied with pilot gas during the steps a) and b).

3. Method according to one of the preceding claims, **characterised in that** the supplying with pilot gas is stopped and the torch is supplied with cutting gas just after the initiation of the pilot arc.

4. Method according to one of claims 1 or 2, **characterised in that** the supplying with pilot gas is stopped and the torch is supplied with cutting gas starting from the transfer of the pilot to the piece.

5. Method according to one of the preceding claims, **characterised in that** a pilot arc is initiated in the step a), at a non-zero pilot intensity I₀.

6. Method according to one of the preceding claims, **characterised in that**, during the step b), the current starts to be increased progressively from the pilot intensity I₀ to a given cutting intensity, with I₁ > I₀.

7. Method according to one of the preceding claims, **characterised in that** in step c), the progressive increasing of the current from I₀ to I₁ is carried out for a given duration (Tᵣ), with Tᵣ < Tₚ where Tₚ is total duration of the drilling step.

8. Method according to one of the preceding claims, **characterised in that** the torch is maintained at the transfer height H₂ for the entire drilling duration Tₚ, preferably the cutting intensity I₁ is maintained at least for a portion of the drilling duration Tₚ.

9. Method according to one of the preceding claims, **characterised in that** after the total drilling of the piece after the step c), a translative displacement movement of the torch is carried out in relation to the piece to be cut according to a given trajectory:
i) by first maintaining the torch at the transfer height H₂ for a given cutting starting duration, and
ii) by carrying out, at the end of the cutting starting duration, a progressive approaching of the torch in relation to the piece to a cutting height H₃ such that: H₁<H₃<H₂.

10. Method according to one of the preceding claims, **characterised in that** the cutting is carried out according to the desired cutting trajectory, by maintaining the torch at the cutting height H₃ and the current at the cutting intensity I₁.

11. Method according to one of the preceding claims, **characterised in that**, prior to the step a), the following steps are carried out progressively:
- the torch is first positioned at an initial height H₀ above the sheet metal to be cut,
- the torch is then brought closer to the piece until an electrical contact is established between the torch and the piece, at a reference height H_{1BI}, with H_{1BIS}<H₀ corresponding to the upper surface of the piece, and
- the torch is then raised to the starting height Hₐ with H₀>Hₐ>H_{1BIS}.

12. Method according to one of the preceding claims, **characterised in that** the pilot gas implemented during the steps a) and b) is chosen from among argon, krypton, xenon, nitrogen and mixtures thereof.

13. Method according to one of the preceding claims, **characterised in that** the cutting gas used starting in the step c) is chosen from among oxygen, nitrogen, air, argon, hydrogen, an argon/hydrogen mixture, a nitrogen/hydrogen mixture and an argon/nitrogen/hydrogen mixture.

14. Plasma-cutting method of a metal piece, in particular made of carbon steel, stainless steel, aluminium, aluminium alloy, titanium or titanium alloy, implementing a transferred-arc plasma-cutting torch that comprises a nozzle (2) and an electrode (1), wherein the starting of the torch is controlled by proceeding according to the method of starting according to one of the preceding claims.

15. Plasma-cutting installation comprising:
- a support frame with a mobile beam whereon is arranged a transferred-arc plasma-cutting torch, said torch itself being arranged in a mobile manner on said beam,
- means of supporting the piece able to and designed to support a piece to be cut,
- means of control that make it possible to control means for the vertical positioning of the torch in such a way as to displace the torch by separating or by approaching in relation to the means of support for the piece,
**characterised in that** the means for controlling are programmed in order to control:
a) a positioning of the torch at a starting height Hₐ provided with respect to the upper surface of the piece to be cut when it is supported by the means for supporting the piece, with H₁<Hₐ<H₂, in such a way as to carry out an initiation of an arc pilot
b) an approaching of the torch of the upper surface of the piece to a transfer height H1 in such a way as to carry out a transfer of the pilot arc to said height H1, and
c) separating of the torch to a drilling height H2, in such a way as to begin the drilling at said height H2.
